# EUROPEAN PATENT APPLICATION

(11) **EP 1 178 418 A2**
(43) Date of publication of application: **06.02.2002**
(21) Application number: 01114699.0
(22) Date of filing: 19.06.2001
(51) Int. Cl.: G06F 17/60

(54) **Support system for setting price of transaction target article**

(30) Priority: 20.06.2000 JP 2000185379
(71) Applicant: TSUBASA SYSTEM CO. LTD., Tokyo (JP)
(72) Inventor: Yoshitaka, Nishimoto, c/o Tsubasa System Co., Ltd., Tokyo (JP)
(74) Representative: Steil, Christian, Dipl.-Ing.

(57) **Abstract**

A support system for setting a price of a transaction target article in response to a request given from a requester includes an external storage device stored with identifying information of the transaction target article and quality information for indicating a quality of the transaction target article, a communication interface for the identifying information of the transaction target article of which a price should be set by the requester and quality evaluating information for evaluating a quality of the transaction target article, a CPU for reading the received identifying information and the quality information coincident with the quality evaluating information from the external storage device, and a communication interface for transmitting the read-out quality information to the requester. A sales applicant is thereby able to set a proper price of the transaction target article.

## Description

### BACKGROUND OF THE INVENTION

### 1. Field of the Invention

The present invention relates generally to a support system for setting a price of a transaction target article, and more particularly to a transaction target article price setting support system applicable to a computer network based transaction system.

### 2. Description of the Prior Art

With a spread of the Internet over the recent years, the commercial transactions are daily conducted via the Internet.

A conventional transaction information system for providing services for the commercial transactions via the Internet, especially a used article transaction information system, includes a sales bulletin board (electronic bulletin board system) on which a sales price of a transaction target article is put up, an auction system in which a participant who sets the highest price for the auction article makes a successful bid of this article, and so on.

In the Internet-based commercial transactions described above, the users of the Internet are allowed to put up sales target articles on the sales bulletin board and participate in the commercial transactions as sales applicants such as entering the articles in the auction.

According to the used article transaction information system, the sales applicant puts up his or her own unnecessary article on the sales bulletin board or enters it in the auction. In this case, the sales applicant is able to set a price of the article (a minimum price in the auction) as the applicant desires. On the occasion of setting the price by the sales applicant, however, the conventional transaction information system provides none of information for setting the price.

A great majority of the sales applicants are, however, amateurs about how to sell the articles offered, and know nothing about the market prices on the market of the sales target used article. The sales applicant therefore tends to set the price higher than the market price, with the result that the purchaser can not be found out, or by contrast sets the price lower than themarketprice, with the result that the sales applicant becomes aware of having made an unprofitable transaction after the dealings.

### SUMAMRY OF THE INVENTION

It is a primary object of the present invention to provide a support system for setting a price of a transaction target article, by which a sales applicant is able to set a proper price of the transaction target article.

To accomplish the above object, according to one aspect of the present invention, a support system for setting a price of a transaction target article in response to a request given from a requester, comprises a storage unit storing identifying information for identifying the transaction target article and quality information for indicating a quality of the transaction target article, a receiving unit receiving the identifying information of the transaction target article of which a price should be set by the requester, and quality evaluating information for evaluating a quality of the transaction target article, a reading unit reading the quality information coincident with the received identifying information and quality evaluating information, and a transmitting unit for transmitting the read-out quality information to the requester.

According to the present invention, the quality information is transmitted to the requester as the support information for setting the price, and hence the price can be set with the quality information being used as a key.

The above support system according to the present invention may further comprise a transaction achievement information storage module for storing transaction achievement information containing information on a transaction price of a transaction actually conducted with respect to the transaction article, and a statistic value calculating unit for calculating, when the reading unit reads from the transaction achievement information storage module at least one item of transaction achievement information coincident with the inputted identifying information and the read-out quality information, a statistic value of the transaction price contained in at least one item of transaction information that has been read out, and the transmitting unit may transmit the calculated statistic value of the transaction price. The statistic value is, for example, an average value of the transaction price. Thus, the statistic value of the transaction price based on transaction achievements is transmitted as the support information to the requester, and therefore the requester is able to set the price more properly.

The support system according to the present invention may further comprise a necessary time related information storage module storing information on a necessary time for the transaction actually conducted with respect to the transaction target article. The statistic value calculating unit may calculate a statistic value of the necessary time on the basis of a single item or plural items of transaction achievement information read out, and the transmitting unit may transmit, to the requester, the statistic value of the necessary time together with the statistic value of the transaction price. The statistic value is, for instance, an average value of the necessary time.

The support system for setting the price of the transaction target article according to the present invention is capable of supplying the requester with the quality information and the statistic value serving as a key for setting the price, whereby the sales applicant becomes able to set the proper price of the transaction target article.

### BRIEF DESCRIPTION OF THE DRAWINGS

FIG. 1 is a diagram showing a network architecture of a transaction system in an embodiment of the present invention;
FIG. 2 is a diagram showing an example of a hardware architecture of the transaction system;
FIG. 3 is a flowchart showing processes of a server;
FIG. 4 is a flowchart showing processes of the server;
FIG. 5 is a diagram showing a display example on an input screen;
FIG. 6 is a diagram showing an example of a vehicle component database;
FIG. 7 is a diagram showing an example of a transaction history database;
FIG. 8 is a diagram showing an example of a price range table;
FIG. 9 is a diagram showing a message of support information displayed in a client;
FIG. 10 is an explanatory diagram showing a first collection table;
FIG. 11 is a diagram showing a message of the support information displayed in the client;
FIG. 12 is an explanatory diagram showing a second collection table;
FIG. 13 is a diagram showing a message of the support information displayed in the client;
FIG. 14 is a diagram showing an input screen in a second embodiment;
FIG. 15 is a diagram showing an example of an assessment item database;
FIG. 16 is a diagram showing a display example of a second input screen;
FIG. 17 is an explanatory diagram showing an example an assessment rank table;
FIG. 18 is a diagram showing a message of the support information displayed in the client;
FIG. 19 is a flowchart showing an operation of the server in the second embodiment;
FIG. 20 is a flowchart showing the operation of the server in the second embodiment;
FIG. 21 is a diagram showing a display example on the input screen in a third embodiment;
FIG. 22 is an explanatory diagram showing a vehicle database; and
FIG. 23 is an explanatory diagram showing a maintenance/repair history database.

### DESCRIPTION OF THE PREFERRED EMBODIMENTS

Embodiments of the present invention will hereinafter be discussed with reference to the accompanying drawings. The present invention is not, however, limited to the following embodiments.

### [First Embodiment]

To begin with, a first embodiment of the present invention will be explained.

### <Network Architecture>

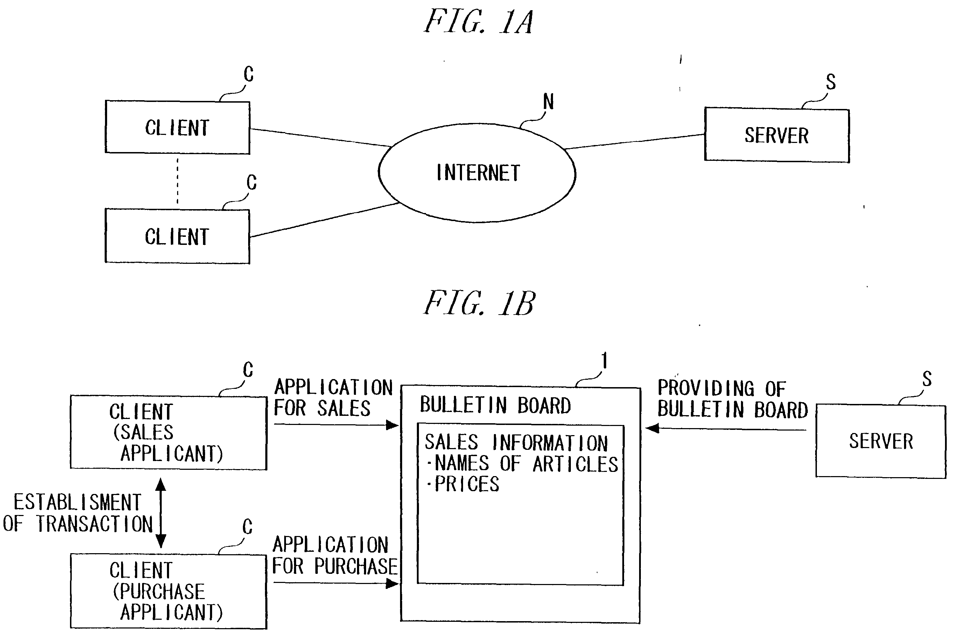

FIG. 1A is a diagram showing an example of a network system architecture of a transaction system to which a support system for setting a price of a transaction target article, is applied. FIG. 1B is a diagram showing a principle of the transaction system

Referring to FIGS. 1A and 1B, the transaction system is configured by a server S as the transaction target article price setting support system, and a plurality of clients C as request source parties connected via an Internet N to the server S. A topology in which the clients C and the server S are connected to the Internet N, may take any one of the existing connection modes (such as a dial-up access, an ISDN connection and a leased circuit connection).

The server S functions as a World Wide Web (WWW) server and retains information on a Web site (homepage) including a bulletin board 1 for browsing pieces of sales information of articles. The server S provides the client C with the Web site including the bulletin board 1 in response to a request given from each client C. Each client C functions as a WWW browser, and a user of the client C is able to browse the bulletin board 1 provided from the server S. The bulletin board 1 lists up the transaction information on the articles dealt with as transaction targets, and the article information is registered in an unillustrated database of the server S.

The user as a sales applicant of each client C is allowed to put up information on the article that the user himself or herself wishes to sell, on the bulletin board 1. On the other hand, the user, when the sale of the article the user himself or herself wants to get is put on the bulletin board 1, is able to show an intention of purchasing the article via the bulletin board 1 to the sales applicant or otherwise (such as delivering an E-mail indicating the intention of buying it to the sales applicant).

A sales contract is thereby agreed upon between the seller (the sales applicant) and the purchase applicant, and the article is exchanged with a value equivalent. A provider (administrator) of the Web site including the bulletin board 1 may be categorized as a broker via the bulletin board 1, who collects a brokerage fee from the user putting up, e.g., the sales information on the bulletin board 1.

Further, though not shown, the server S provides each of the clients C with a virtual auction site as a Web site. The user of each client C enters an article the user desires to sell, and shows a minimum price thereof. Then, a user of other client C shows a price of this article that is equal to or higher than the minimum price. Then, the user showing the highest price is able to purchase this article.

Thus , according to the Internet N based transaction system, the users of the clients C are capable of selling and buying the articles via the bulletin board 1 and the virtual auction site as well.

In the first embodiment, the server S provides each of the clients C with the bulletin board 1 for the transaction information (sales information) on vehicle components (parts) as transaction targets. The user of the client C is freely able to or given a permission to put up on the bulletin board 1 a user's own vehicle component (irrespective of whether it is new or used one) the user desires to sell. The vehicle in terminology includes a privately owned car, a truck, a motor bicycle, etc.

At this time, the user must indicate a desired sales price of the vehicle component on the bulletin board 1. On this occasion, the server S provides the user of the client C with information for supporting the user to set the desired sales price.

### <Hardware Architectures of Client and Server>

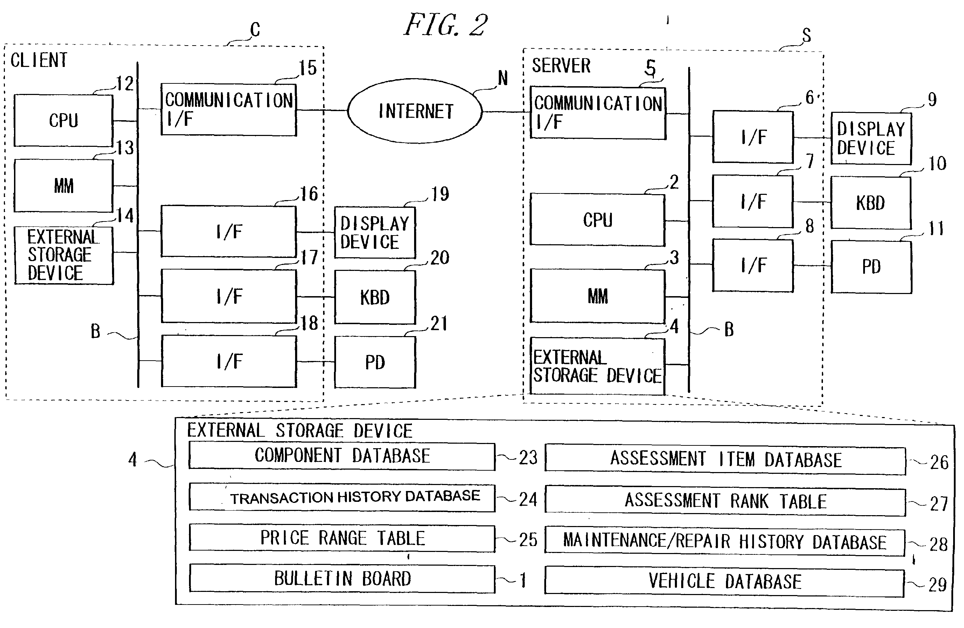

Next, hardware architectures of each client C and the server S shown in FIG. 1 will be explained. FIG. 2 is a diagram showing an example of the hardware architectures of the client C and the server S. The clients C have, however, the same architecture, and therefore only one client C is illustrated in FIG. 2.

Referring to FIG. 2, the server S is constructed by use of a personal computer (PC) , a workstation (WS) , a host computer above these components, or a dedicated server machine etc.

The server S includes a CPU 2 (corresponding to a reading unit, a statistic value calculating unit and an extracting unit), a main memory (MM) 3, an external storage device (secondary storage) 4 (corresponding to a storage unit), a communication interface (corresponding to a communication interface I/F: a transmitting unit and a receiving unit) 5 connected via a communication line to the Internet N, and interface circuits (I/F) 6, 7 and 8.

A display device 9 such as a cathode-ray tube, a liquid crystal display, a plasma display etc is connected to the I/F 6. A keyboard (KBD) 10 is connected to the I/F 7. A pointing device (PD) 11 such as a mouse, a trackball, a joystick, a flat point etc is connected to the I/F 8.

The external storage device 4 is constructed by use of a readable/writable recording medium such as a hard disk, a floppy disk, an optical disk, a magneto-optic disk (MO) etc. the external storage device 4 is stored with plural kinds of programs such as an operating system (OS), a program relative to a communication protocol and a program for the server S to function as the WWW server which are all executed by the CPU 2. The external storage device 4 is further stored with data (such as a text file, an image file and an HTML (HyperText Markup Language) file that create a homepage containing the bulletin board 1.

Moreover, the external storage device 4, for the user (sales applicant) of the client C who puts up on the bulletin board 1 the vehicle component the user desires to sell, retains a component DB 23, a transaction history DB 24, a price range table 25, an assessment item DB 26, an assessment rank table 27, a maintenance/repair history DB 28 and a vehicle DB 29 as databases (DBs) for supporting the user to set the price of the vehicle component. The external storage device 4 corresponds to a storage unit according to the present invention.

The CPU 2, corresponding to an input of indication of an operator of the server S, copies necessary items of data to main memory 3 from the external storage device 4, then loads the program corresponding to the input of indication into the MM 3 from the external storage device 4 and executes the loaded program. The CPU 2 thereby executes processes related to communications with the client C, e.g., a variety of information processes such as a process of providing the homepage containing the bulletin board 1 in response to a request from the client C, and a process of providing information for supporting the setting of the price of the vehicle component.

Namely, the CPU 2 executes the program, whereby the server S functions as a transaction target article price setting support system including the storage unit, the receiving unit, the reading unit, the transmitting unit; the statistic value calculating unit and the extracting unit.

The main memory (MM) 3 is used as a working area for the CPU 2 and also used as a video random access memory (VRAM) for storing texts, images and videos displayed on a screen of the display device 9.

The client C is constructed by using the personal computer (PC). All the computers each capable of becoming at least an information processing terminal (DTE: Data Terminal Equipment)⁻ to the existing Internet N such as the workstation (WS) , mobile computers, personal digital assistants (PDA) like an electronic note etc, a car navigation terminal, a mobile telephone (cellular phone) and so on, can be applied to the client C.

The client C includes a CPU 12, a main memory MM 13, an external storage device 14, and a communication interface (I/F) 15, interfaces (I/Fs) 16, 17 and 18 that are the same components as those of the server S. A display device 19 is connected to the I/F 16. A KBD 20 is connected to the I/F 17. A PD 21 is connected to the I/F 18.

The external storage device 14 is stored with a variety of programs such as an OS, a program for the client C to function as the WWW browser, and a program related to the communication protocol with respect to the server S.

The CPU 12, corresponding to an input of indication of the user (operator) of the client C, copies necessary items of data to MM 13 from the external storage device 14, then loads the program corresponding to the input of indication into the MM 13 from the external storage device 14 and executes the program. The CPU 12 thereby executes a process of requesting the server S to provide the bulletin board 1, a process of transmitting to the server S the information that should be put up on the bulletin board 1, and a process of requesting the server S to provide information for supporting the user to set a price of the vehicle component.

### <Processes of Server and Client>

Next, a discussion on the processes of the server S and of the client C will be made focusing on the process of the server S. The user of the client C, when browsing the bulletin board 1 retained in the server S, accesses the server S by an operation of the client C.

That is, the user boots the WWW browser by operating the client C and thereafter specifies a URL (Uniform Resource Locator) linked to the homepage containing the bulletin board 1 of the server S. Then, the CPU 12 of the client C transmits a request for providing a Web page corresponding to the URL to the Internet N from the communication interface I/F 15. This request is received by the server S via the Internet N.

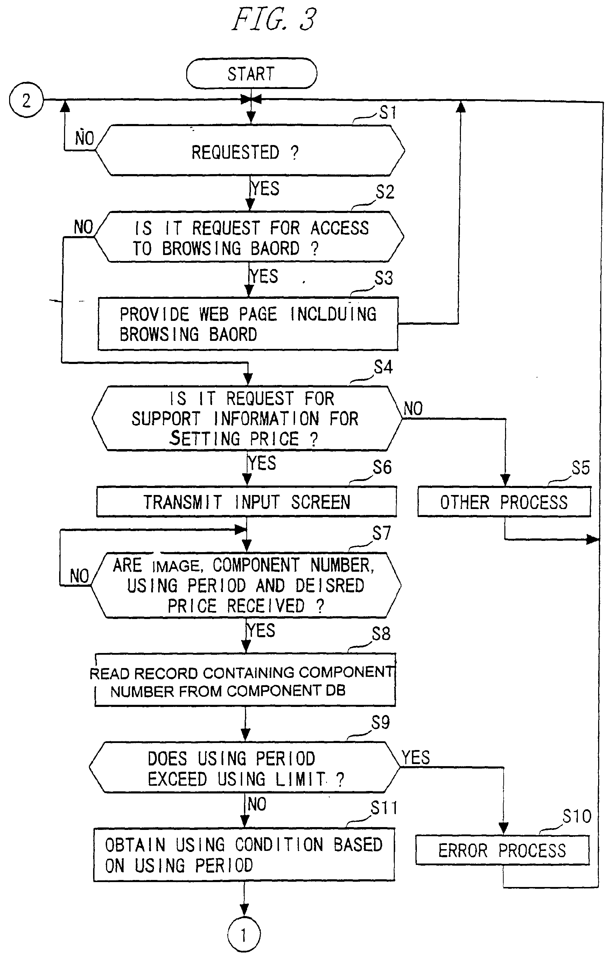

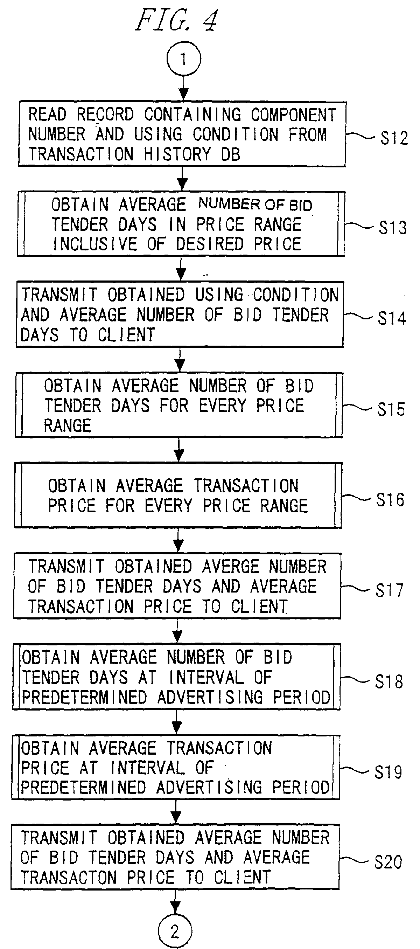

Then, the CPU 2 of the server S starts the processes shown in FIG. 3. FIGS. 3 and 4 are flowcharts showing the processes (the processes in the server S) executed by the CPU 2 of the server S. Referring to FIG. 3, the CPU 2 of the server S is in a status of accepting a variety of requests from the respective clients C (step S1).

Thereafter, the CPU 2, when accepting the request given from the client C (step S1; Y) , judges whether or not the accepted request is a request of the client C for accessing the bulletin board 1 (which is a request for providing the Web page of the bulletin board 1) (step S2).

At this time, the CPU 2, when judging that the request is the request for providing the bulletin board 1 (step S2; Y) , provides the client C with the relevant Web page of the bulletin board 1 (step S3). To be more specific, the CPU 2 reads from the external storage device 4 the HTML file, the text file and the image file that configure the relevant Web page, and transmits these files to the client C concerned via the communication I/F 5. Thereafter, the CPU 2 returns the processing to step S1 and reverts to the status of accepting other requests.

The HTML file and other files transmitted from the server S are received by the communication interface 15 of the relevant client C via the Internet N. Then, the CPU 12 of the client C creates, on the MM 13, image data of the Web page on which the texts and images are laid out based on descriptions of the received HTML file. The CPU 12 then displays an image corresponding to the image data on the screen of the display device 19.

The Web page of the bulletin board 1 is thereby displayed on the display device 19 of the client C, whereby the user of the client C is able to browse the sales information of the vehicle component put up on the bulletin board 1.

Herein, it is assumed that the user of the client C tries to sell an unnecessary vehicle component (used parts: secondhand parts) by utilizing the bulletin board 1, in this case, the user of the client C must indicate a sales price of the sales target (transaction target) vehicle component and thus put up the sales information (transaction information) thereof on the bulletin board 1.

At this time, the user, if unconfident of the sales price of the vehicle component and unsure to judge how long it takes a time to establish the transaction, inputs an indication for being provided with support information for setting the sales price by operating the KBD 20 and/or the PD 21. Then, the CPU 12 of the client C generates a message of the request for providing the support information, and delivers the message to the server S from the communication interface I/F 15 via the Internet N.

The CPU 2 of the server S, when receiving the support information providing request received by the communication' interface 5, makes a "YES" judgement in step S4 after through steps S1 and S2, and advances the processing to step S6. Whereas if the CPU 2 makes a "NO" judgement in step S4, the CPU 2 executes other process corresponding to the request received in step S5, and loops the processing back to step S1.

When the processing proceeds to step S6, the CPU 2 transmits, to the client C, the data of an input screen 31 for inputting the information needed for creating the support information. When the client C receives the data on the input screen 31, the CPU 12 displays the input screen 31 on the display device 19 on the basis of the same data.

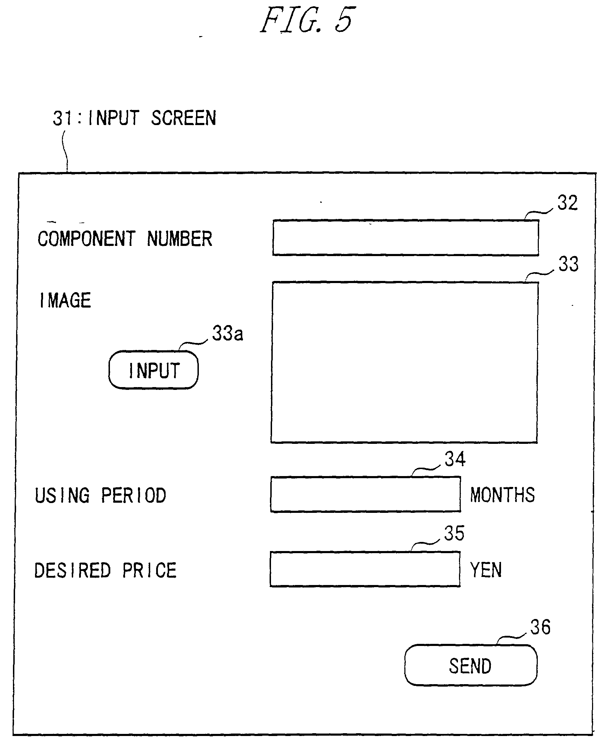

FIG. 5 is a diagram showing a display example of the input screen 31 displayed on the display device 19. Referring to FIG. 5, the input screen 31 includes a component (parts) number entry box 32 of the vehicle component corresponding to the sales target, an image displaying area 33 for displaying the image or video of the vehicle component, a using period entry box 34 of the vehicle component, a desired sales price entry box 35, and a send button 36.

The component number entered in the entry box 32 involves the use of, for instance, a number allocated beforehand to the component by the provider (administrator) of the Web page of the bulletin board 1. The image displaying area 33 displays an image of the component scanned by, e.g., a camera type image scanner (not shown) connected via an unillustrated interface to the client C. In this case, an input button 33a provided on the input screen 31 is used as a start button of a scan operation of the image scanner.

In this respect, when the user of the client C specifies a component image file (GIF (Graphics Interchange Format), Windows BMP, JPEG (Joint Photographic Experts Group), etc.) recorded on the external storage device 4, the component image may also be displayed in the display area 33. In this case, the component image file is created from a digital image photographed by, e.g., a digital camera and a digital video camera, and is recorded on the external storage device 4.

A period (using period) for which the user has been using the vehicle component concerned, is entered on a monthly unit in the entry box 34. The unit for the using period may arbitrarily be set. A year, date, hour and minute may also be each adopted as a unit for the using period. The sales price (desired sales price) of the vehicle component, which is desired by the user, is entered in the entry box 35.

The user, when the input screen 31 is displayed on the display device 19, inputs the component image to the client C by manipulating the KBD 20 and/or the PD 21, and enters the component number, the using period and the desired sales price in the entry boxes 32, 34 and 35. Thereafter, when depressing the send button 36 by manipulating the KBD 20 or the PD 21, the CPU 12 transmits, to the server S, pieces of identifying information (the image and the component number) of the (transaction target) vehicle component, the quality evaluating information (using period) and the desired sales price that are inputted via the input screen 31.

On the other hand, the CPU 2 of the server S, when transmitting the data on the input screen 31 to the client C in step S6, waits for the information inputted via the input screen 31 to be transmitted from the client C (step S7). Then, the CPU 2, when receiving the relevant information from the client C (step S7; Y), advances the processing to step S8.

In step S8, the CPU 2 refers to the component database (DB) 23 stored in the external storage device 4 and reads, from the component DB 23, a record corresponding to the component number received from the client C into the main memory MM 3, and advances the processing to step S9.

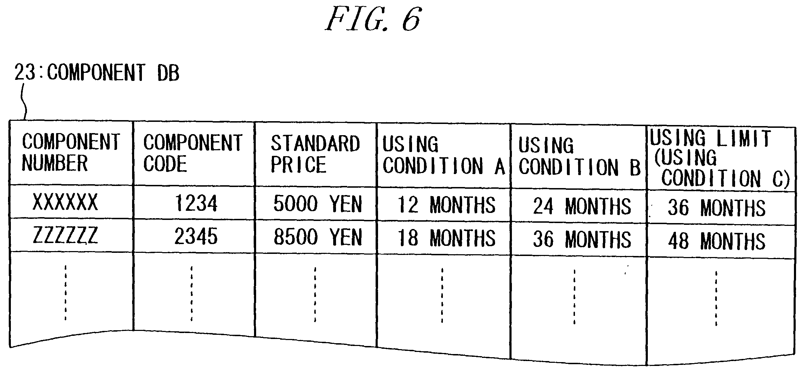

FIG. 6 is a diagram showing an example of a data structure of the component DB 23 shown in FIG. 2. Referring to FIG. 6, the component DB 23 retains at least one record consisting of a component number field, a component code field, a standard price field, a field of using condition A, a field of using condition B and a field of using limit (using condition C).

The component number is a unique number allocated to the component by the administrator of the Web site including the bulletin board 1, and is used as the identifying information (ID) of the component. The component code is a code given by the administrator based on a function of the vehicle component irrespective of a category of the vehicle, and is used as information for showing a category of the component. The standard price is a standard retail price (a so-called fixed price) of the component. Note that the standard price may also be a price accounting for a market price such as an actual retail price on the market.

Further, each of the using conditions A, B and C is defined as quality information indicating a quality corresponding to the using period of the vehicle component, and is set per component. The using limit indicates a using period expired when a value of the component comes to nothing (zero) . The component of which the using period exceeds the using limit is dealt with as what is valueless. A record in the component DB 23 is created each time a transaction target component to be put up on the bulletin board 1 is added and registered.

In step S9, the CPU 2 of the server S compares the using period received from the client C with the using limit in the record read into the MM 3, and judges whether the using period exceeds the using limit. At this time, the CPU 2, if the using period exceeds the using limit (step S9; Y) advances the processing to step S10 and executes an error process. Namely, the CPU 2 creates an error message saying that the component the user desires to sell has its using period exceeding the using limit and is valueless (impossible of being sold) , and delivers this message to the client C. The error message is thereby displayed on the display device 19 of the client C. Thereafter, when finishing the process in step S10, the CPU 2 returns the processing to step S1.

By contrast, the CPU 2, if the using period does not exceed the using limit (step S9; N), obtains a using condition of the component (step S11). That is, the CPU 2 compares the using period with each of the using conditions A, B and C in the record, and specifies the using condition coincident with the using period.

Next, the CPU 2 reads, into the MM 3, all the records corresponding to the component number received from the client and to the using condition obtained in step S11 out of the transaction history database (DB) 24 stored in the external storage device 4 (step S12; see FIG. 4), and advances the processing to step S13.

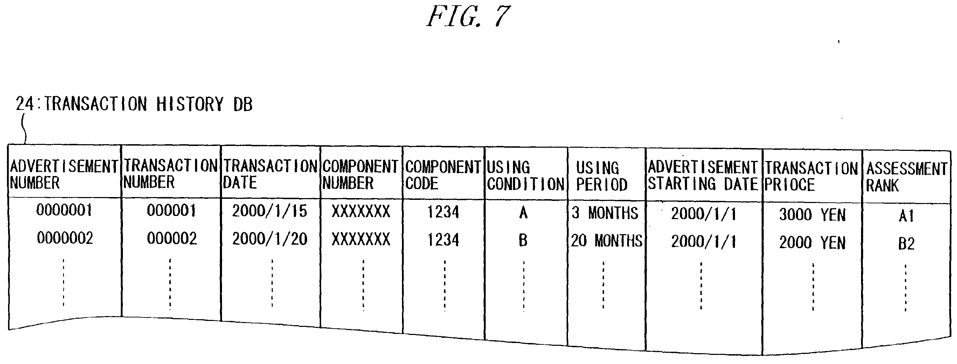

FIG. 7 is a diagram showing an example of a data structure of the transaction history DB 24 shown in FIG. 2. Referring to FIG. 7, the transaction history DB 24 is a database stored with a history of the transaction established via the bulletin board 1. The transaction history DB 24 consists of a single record or a plurality of records each composed of fields such as an advertisement number, a transaction number, a transaction date, a component number, a component code, a using condition, a using period, an advertisement starting date, a transaction price and an assessment rank. Each of the records stored in the transaction history DB 24 corresponds to transaction achievement information according to the present invention.

The advertisement number is a unique number used as information for specifying the sales information (transaction information) put up (advertised) on the bulletin board 1. The transaction number is a unique number for specifying the transaction established via the bulletin board 1. The transaction date is a year, month and date when the transaction has been established, and the administrator of the bulletin board 1 adequately sets a date when the sales contract has been established or a date when the vehicle component has been exchanged with a value equivalent.

The advertisement starting date is a date when the sales information starts being advertised on the bulletin board 1. The transaction price is an amount of money set as the value equivalent to the component in the sales contract of the vehicle component. The assessment rank indicates a quality based on a predetermined assessment standard set by the administrator of the bulletin board 1. Note that each time the transaction is established via the bulletin board 1, a new record of the sales transaction established is registered in the transaction history DB 24 as one of the other processes in step S5.

In step S13, the CPU 2 obtains an average number of bid tender days during which bids for the component in a price range (price zone) inclusive of the desired sales price have been received from the clients C by using single record or a plurality of records (refer as "first extraction record (s) ") read out from the transaction history DB 24 in step S12. The average number of bid tender days is a number of days required for establishing the transaction of the transaction target component since the transaction information of the transaction target was advertised on the bulletin board 1, and indicates a required period of time for the transaction. The time which the transaction has been established is, for example, a time when the purchaser showed an intention of purchase to the seller, a time when the intention of purchase was conveyed to the administrator of the bulletin board 1 and a time when the component was exchanged with the value equivalent, may properly be selected.

To describe step S13 in depth, the CPU 2 refers to the price range table 25 stored in the external storage device 4, and judges which price range in the price range table 25 the desired sales price concerned falls within.

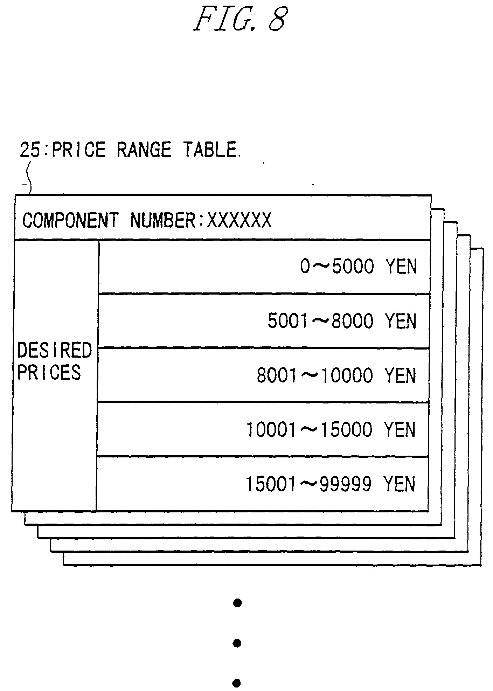

FIG. 8 is a diagram showing an example of the price range table 25 shown in FIG. 2. As shown in FIG. 8, the price range table 25 is provided for every component number in this example. The price range table 25 may, however, be provided for every component code.

Further, the price range table 25 in this example provides five price ranges such as 0 ∼ 5000 yen, 5001 ∼ 8000 yen, 8001 ∼ 10000 yen, 10001 ∼ 15000 yen and 15001 ∼ 99999 yen. The CPU 2 compares the desired sales price with each of the price ranges, thereby drawing out the price range inclusive of the desired sales price.

Note that the number of the price ranges and a size of each price range may be properly set. Further, as a substitute for using the price range table 25, a minimum price and a maximum price that define a price range may also be arithmetically calculated such as setting a range for every 2000 yen or 3000 yen and so on.

The CPU 2, when obtaining the price range embracing the desired sales price, extracts a record in which the transaction prices falls within the price range as a second extraction record from a first extraction record. Subsequently, the CPU 2 subtracts the advertisement starting date from the transaction date with respect to each of the second extraction records, and divide a sum of the subtracted results by the number of the second extraction records, thereby obtaining an average number of bid tender days.

Thereafter, the CPU 2 creates a message containing the using condition obtained in step S11 and the average number of bid tender days obtained in step S13, and delivers the created message to the relevant client C (step S14). Thereafter, the CPU 2 advances the processing to step S15.

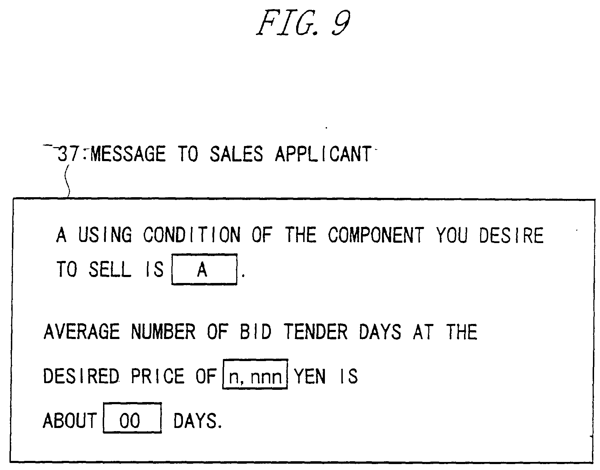

The client C, when receiving the message delivered from the server S , displays the received message on the display device 19. FIG. 9 is a diagram showing a display example of a message 37 to the sales applicant that corresponds to the process in step S13. Thus, the component sales applicant (the user of the client C) is provided with the using condition as the quality information of the sales target component and the average number of bid tender days in the price range inclusive of the desired sales price as pieces of support information for setting the sales price.

In step S15, the CPU 2 obtains the average number of bid tender days for every price range and subsequently obtains an average transaction price for every price range (step S16). The processes in steps S15 and S16 will hereinafter be explained in greater details.

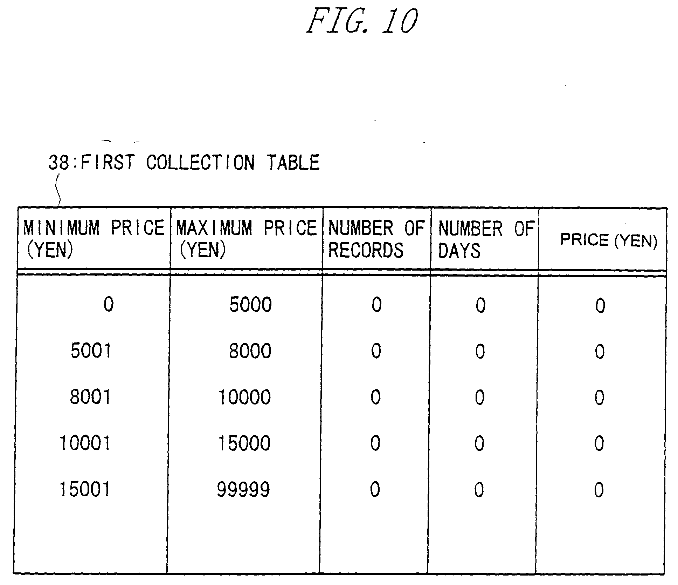

The CPU 2 creates a first collection table based on the price range table 25 referred to in step S13 in the main memory MM 3. FIG. 10 is an explanatory diagram showing a first collection table 38. The first collection table 38 is a table for collecting the number of records, the number of days and the transaction price, which correspond to each of the price ranges retained in the price range table 25. When the first collection table 38 is created, the number of records, the number of days and the transaction price, which correspond to each of the price ranges, are each set to zero as an initial value (see FIG. 10).

The CPU 2, when creating the first collection table 38, with respect to a certain first extraction record, refers to the price range inclusive of the transaction price thereof, and increments "the number of records" in the first collection table 38 by "1" ("1" is added to the number of records), which corresponds to the relevant price range. Subsequently, the CPU 2 subtracts the advertisement starting date from the transaction date in the first extraction record, and adds a value of this subtracted result to "the number of days" corresponding to the relevant price range. Further, the CPU 2 adds the transaction price in the first extraction record to "the price" corresponding to the relevant price range. The CPU 2 executes the processes given above with respect to all the first extraction records.

Thereafter, the CPU 2, when finishing the above processes for all the first extraction records, divides a value of each "number of days" and a value of each "price" retained in the first collection table 38 by "the number of records" corresponding thereto. Thus, the CPU 2 obtains an average value (an average number of bid tender days) of "the number of days", and also an average value (an average transaction price) of the "price".

Thereafter, the CPU 2 creates a message containing the average number of bid tender days and the average transaction price that have thus been obtained, and transmits the created message to the relevant client C (step S17). After this process, the CPU 2 advances the processing to step S18.

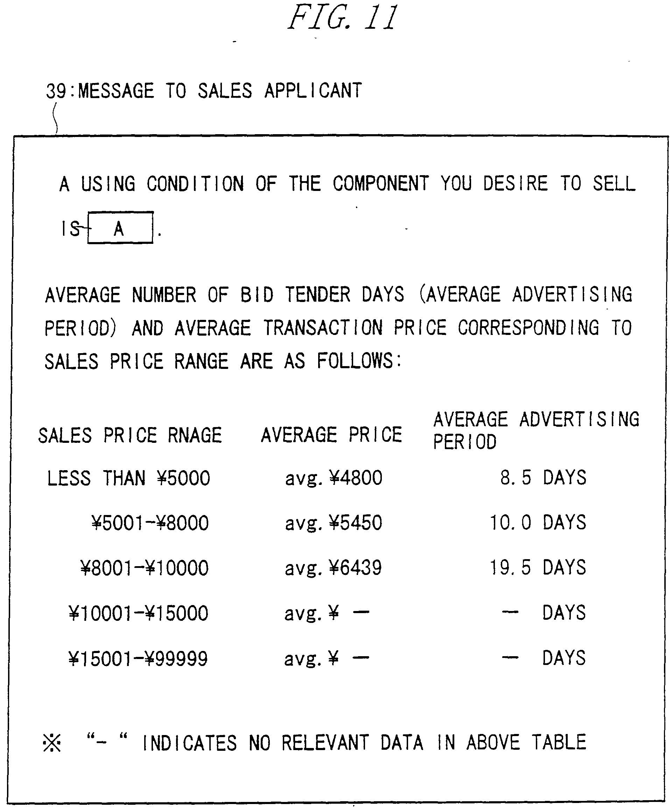

The client C, when receiving the message delivered from the server S, displays this message on the display device 19. FIG. 11 is a diagram showing a display example of a message 39 to the sales applicant, which corresponds to the processes in steps S15 and S16. The user of the client C is thus provided with the using condition corresponding to the quality information on the sales target vehicle component as the support information for setting the sales price. The user of the client C is also provided with the average number of bid tender days and the average transaction price for every price range.

In step S18, the CPU 2 obtains the average number of bid tender days at an interval of a predetermined advertising period. Subsequently, the CPU 2 obtains the average transaction price days at an interval of a predetermined advertising period (S19). The following is the details of steps S18 and S19.

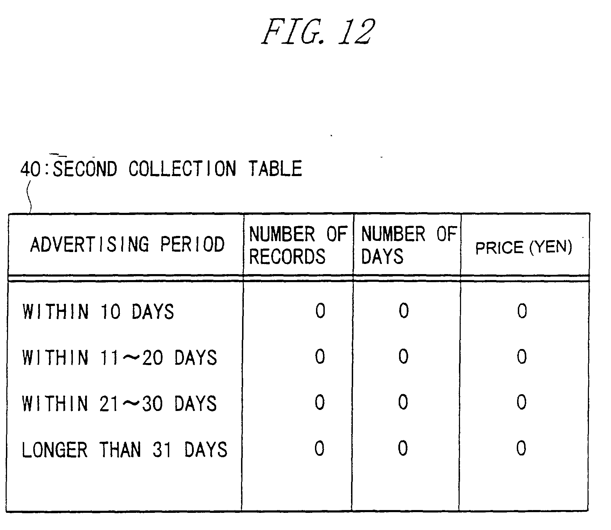

The CPU 2 creates a second collection table 40 based on a predetermined advertising period (e.g., 10 days, 20 days and 30 days) in the MM 3. FIG. 12 is an explanatory diagram showing the second collection table 40. The second collection table 40 collects and retains the number of records, the number of days and the transaction prices corresponding to each of the predetermined advertising periods. When the second collection table 40 is created, the number of records, the number of days and the transaction prices corresponding to each of the predetermined advertising periods, are each set to zero as an initial value (see FIG. 12).

The CPU 2, when creating the second collection table 40, with respect to a certain first extraction record, increments "the number of records" in the second collection table 40 by "1" ("1" is added to the number of records), which corresponds to the advertising period containing the number of days obtained by subtracting the advertisement starting date from the transaction date. Subsequently, the CPU 2 subtracts the advertisement starting date from the transaction date in the first extraction record, and adds a value of this subtracted result to "the number of days" corresponding to the relevant adverting period. Further, the CPU 2 adds the transaction price in the first extraction record to "the price" corresponding to the relevant advertising period. The CPU 2 executes the processes given above with respect to all the first extraction records.

Thereafter, the CPU 2, when finishing the above processes for all the first extraction records, divides a value of each "number of days" and a value of each "price" retained in the second collection table 40 by "the number of records" corresponding thereto. Thus, the CPU 2 obtains an average value (an average number of bid tender days) of "the number of days", and also an average value (an average transaction price) of the "price".

Thereafter, the CPU 2 creates a message containing the average number of bid tender days and the average transaction price that have thus been obtained, and transmits this message to the relevant client C (step S20). After this process, the CPU 2 loops the processing back to step S1.

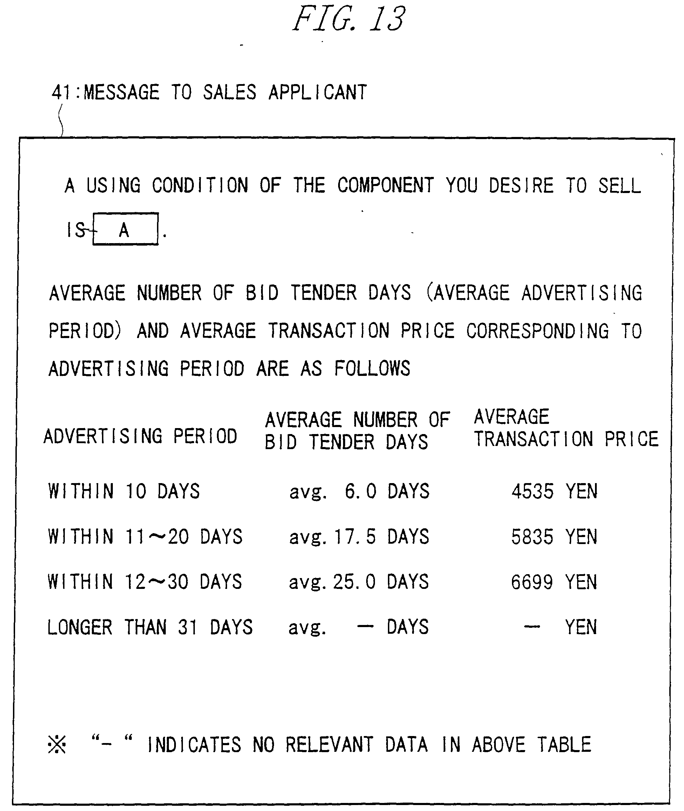

The client C, when receiving the message delivered from the server S, displays the received message on the display device 19. FIG. 13 is a diagram showing a display example of a message 41 to the sales applicant, which corresponds to the processes in steps S18 and S19. The component sales applicant (the user of the client C) is thus provided with the using condition corresponding to the quality information on the sales target vehicle component as the support information for setting the sales price. The user of the client C is also provided with the average number of bid tender days and the average transaction price at the interval of the predetermined advertising period.

Note that the first embodiment has given the example in which the predetermined advertising period is set to less than 10 days , 11 ∼ 20 days , 21 ∼ 30 days , and 31 days or longer, however, a length of the advertising period may adequately set.

### <Operation in First Embodiment>

According to the first embodiment, if the user of the client C wishes to sell the vehicle component via the bulletin board 1, the client C gives the server S the request for the support information for setting the price of the vehicle component. The client C is given the input screen 31 for the server S to input the information (the information for identifying the transaction target, and the quality evaluation information) needed for providing the support information.

Then, the client C supplies the server S with the identifying information (the image and the component number) of the transaction target component, the quality evaluation information (the using period) of this component and the desired sales price via the input screen 31. Then, the server S evaluates the quality (the using condition) of the component on the basis of the identifying information of the component and the quality evaluation information (the using period) (step S11).

Subsequently, the server S obtains the average number of bid tender days in the price range embracing the desired sales price by use of the respective items of information received from the client C and the transaction achievement information (the records in the transaction history DB 24) of the sales conducted via the bulletin board 1 (step S13). Then, the server S supplies the client C with the using condition and the average number of bid tender days as the support information (step S14).

The support information is displayed on the display device 19 of the client C. The user (the sales applicant) of the client C is able to know the quality of the sales target component and also to know from the average number of bid tender days how long it takes a time to catch the purchaser of the relevant component at the desired sales price.

Moreover, the server S obtains the average number of bid tender days and the average transaction price for every price range with respect to the sales target component (steps S15 and S16), and supplies these pieces of data to the client C (step S17). The sales applicant is thereby able to know how soon the purchaser will be found out by recognizing which price range is proper for the sales target component.

Further, the server S obtains the average number of bid tender days and the average transaction price at the interval of advertising period with respect to the sales target component (steps S18 and S19), and supplies these pieces of data to the client C (step S20). With this operation, the sales applicant is able to know a relation between the length of the advertising period and the transaction price with respect to the sales target component.

As discussed above, the sales applicant can receive the quality information of the sales target component by receiving the information about the using condition as the support information, and can utilize these pieces of information as a key for setting the prices of the vehicle component concerned. Further, the sales applicant receives the information on the transaction achievements (the average number of bid tender days and the average transaction price as statistic values) with respect to the component the user wants to sell and the component of which the component number and the using condition are the same (the identifying information and the quality information are the same) as the support information. The sales applicant is thereby capable of predicting how soon the purchaser can be found out by knowing how much the price of the sales target component is set.

Accordingly, the sales applicant is capable of setting the desired sale price of the sales target component to a price that leads to a desirable result (such as being sold higher and sooner) to the sales applicant. Namely, the sales applicant is able to properly set the price. The administrator of the bulletin board 1 is capable of increasing the number of users of the bulletin board 1 and of, in the case of collecting the fee for using the bulletin board 1 from the user thereof, improving the profits.

Incidentally, the contrivance in the first embodiment is that the processing result in step S13, the processing results in steps S15 and S16 and the processing results in steps S18 and S19, are individually transmitted to the client C. The server S may, however, transmit to the client C one message into which the messages 37, 39 and 41 are integrated just when finishing the process in step S19.

Further, the process in step S13, the processes in steps S15, S16 and the processes in steps S18, S19 are executed in series to the request for providing one item of support information. The client C may, however, request only any one of the processes described above.

Moreover, the process in step S13, the processes in steps S15, S16 and the processes in steps S18, S19 may take any sequence. Further, the process in step S15 and the process in step S16 may be reversed in order, and the process in step S18 and the process in step S19 may also be reversed in order.

Furthermore, the first embodiment takes such a mode that the server S provides the support information to the client C. However, the external storage device 14 of the client C is stored with the same content as what is stored in the external storage device 4, and the support request is inputted from the KBD 20 or the PD 21, in which case the CPU 12 of the client C may execute the processes shown in FIGS. 3 and 4, and the messages 37, 39, 41 may be displayed on the display device 19. Namely, the present invention may be actualized by a stand-alone computer. This is the same with second and third embodiments.

### [Second Embodiment]

Next, a second embodiment of the present invention will be discussed. The second embodiment has the points common to the first embodiment. Hence, the discussion will concentrate on different points therebetween.

The processes of the server S and the client C in the second embodiment are the same as those in the first embodiment as far as the steps S1 ∼ S5 shown in FIG. 3 are concerned. In the second embodiment, however, an input screen transmitted to the client C from the CPU in step S6 is different from the input screen in the first embodiment.

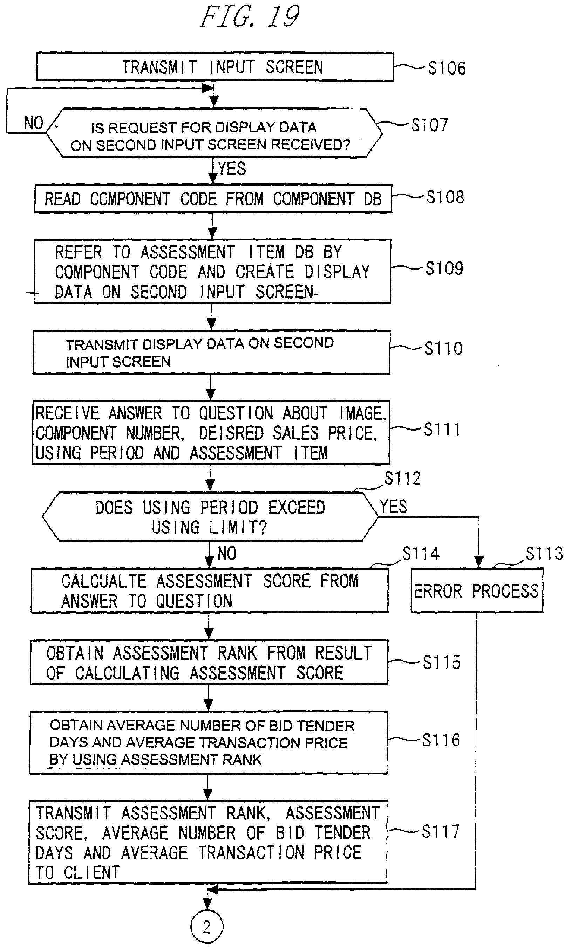

FIG. 19 is a flowchart showing the processes of the server S (the processes of the CPU 2) in the second embodiment. In the second embodiment, the CPU 2 transmits display data on an input screen 31A in place of the input screen 31 to the client C in step S106 corresponding to step S6.

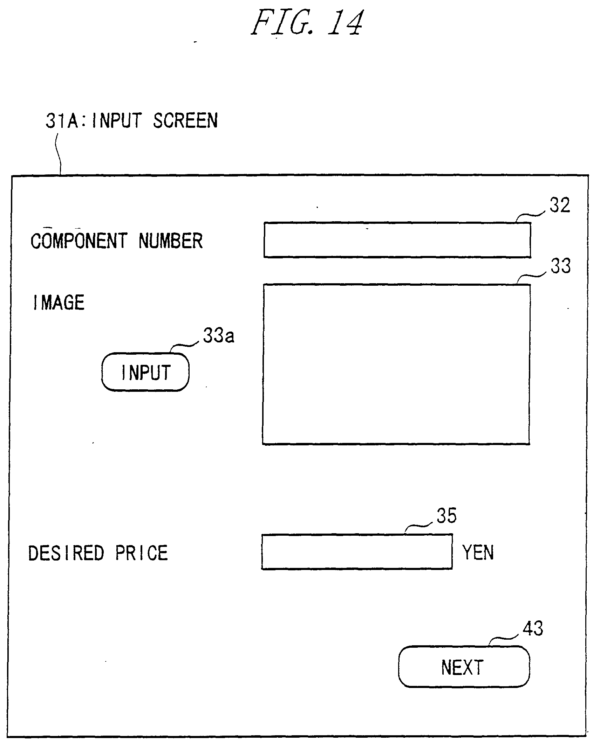

FIG. 14 is a diagram showing a display example on the input screen 31A in the second embodiment. As shown in FIG. 14, the input screen 31A is different from the input screen (see FIG. 5) in terms of the following point. That is, the input screen 31A does not include the using period entry box 34 and is provided with a "Next" button as a substitute for the transmission button 36.

When the client C receives the display data on the input screen 31A and displays the input screen 31A on the display device 19, the user of the client C inputs an image a component number and a desired price by the same method as that in the first embodiment. Then, the "Next" button 43 is depressed by manipulating the KBD 20 or the PD 21.

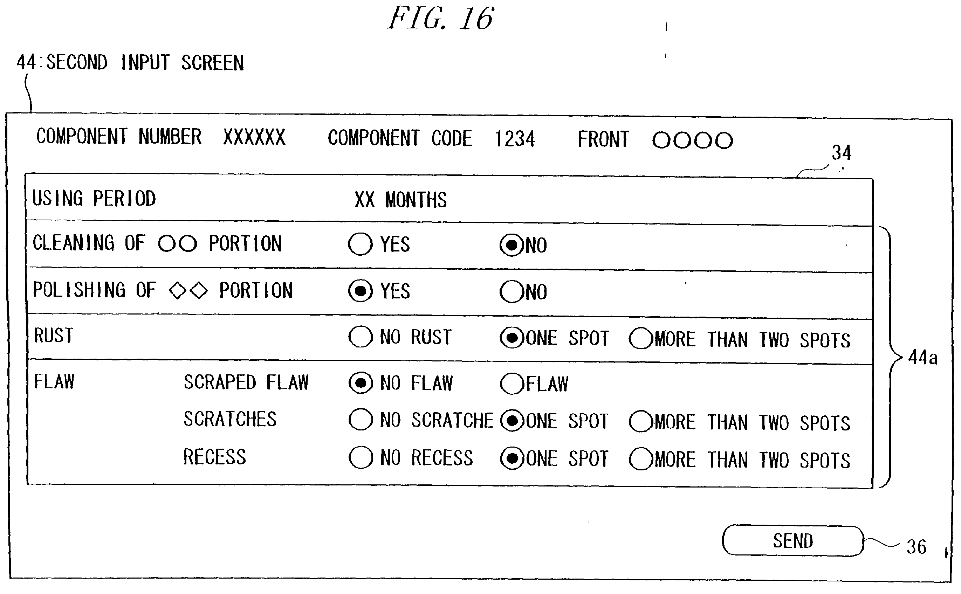

Then, the CPU 12 of the client C transmits, to the server S, a request for being given the display data on a second input screen 44 (see FIG. 16) which contain at least a component number of the sales target vehicle component. The CPU 2 of the server S, upon receiving this request (step S107; Y) , refers to the component database DB 23 and reads from the component DB 23 a component code corresponding to the component number received from the client C into the MM 3(step S108).

Next, the CPU 2 refers to the assessment item database DB 26 stored in the external storage device 4 and corresponding to the component code read into the MM 3, and reads assessment check items into the MM 3, thereby creating display data (based on an HTML format etc) on the second input screen 44 step S109).

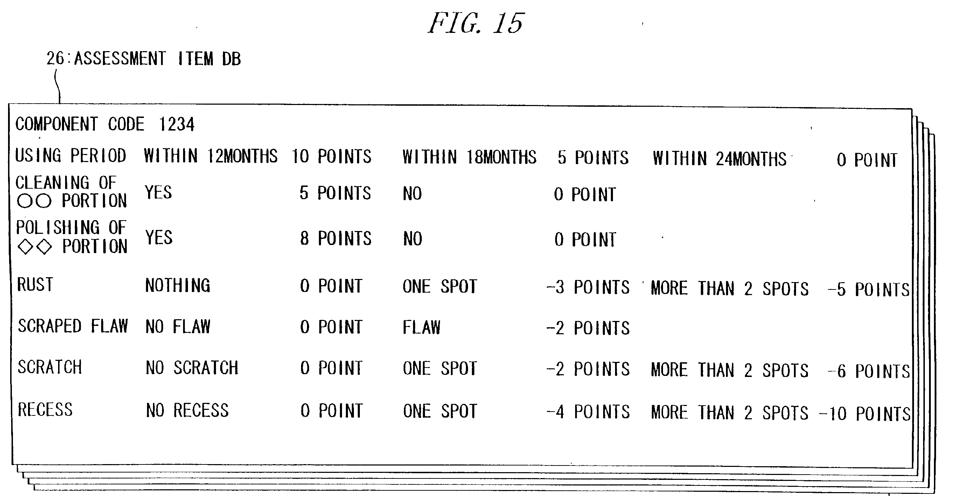

FIG. 15 is a diagram showing an example of a data structure of the assessment item DB 26 shown in FIG. 2. The assessment item DB 26 is provided for, e.g., every component code. The assessment item DB 26 retains information on the assessment items of an assessment target component and scores (points) corresponding to answers to questions about the assessment items in a structure suited to a layout on the second input screen 44. In the example shown in FIG. 15, the assessment items in the assessment item DB 26 are a using period, cleaning of ○ ○ portion, polishing of ◇◇ portion, rust, scraped flaw, scratches and a recess.

The CPU 2, when creating the display data on the second input screen 44, transmits the display data to the client C (step S110). The client C, upon receiving the display data, displays the second input screen 44 based on the display data on the display device 19.

FIG. 16 is a diagram showing a display example on the second input screen 44. Referring to FIG. 16, the second input screen 44 includes the using period entry box 34, an answer box 44a to the questions about the assessment items retained in the assessment item DB 26, and the send button 36. Plural concepts of answers to the questions about the assessment items are displayed in the answer box 44a, and a check box containing check circles for respective answers is provided.

The user of the client C enters the using period in the entry box 34 and checks the check circle corresponding to the answer in the check box with respect to the question about each assessment item, thereby answering the question. Then, when finishing picking up the answers to all the questions, the user depresses the send button 36.

Then, the CPU 12 of the client C transmits, to the server S, the image, the component number and the desired sales price that have been inputted on the input screen 31A, and the answers to the questions about the using period and other assessment items that have been inputted on the second input screen 44.

The CPU 12 of the server S, when receiving the respective pieces of information via the communication interface I/F 5 (step S111), as in the first embodiment, judges whether or not the using period exceeds the using limit (step S112) . If over the using limit (step S112; Y), the error process (step S113; the same as step S10) described above is executed.

Whereas if the using period does not exceed the using limit (which does not correspond to the using condition C) (step S112; N), the CPU 2 refers again to the assessment item DB 26 used for creating the display data on the second input screen 44, and calculates assessment scores (points) in accordance with the answers to the questions, which have been received from the client C (step S114). For instance, the CPU 2 sets a base of the assessment score to 100, and adds or subtracts a score corresponding to the answer to the question to or from the base score 100.

Next, the CPU 2 obtains an assessment rank by use of the calculated result of the assessment score (step S115). That is, the CPU 2 refers to the assessment rank table 27 stored in the external storage device 4 and reads therefrom the assessment rank corresponding to the calculated result into the MM 3.

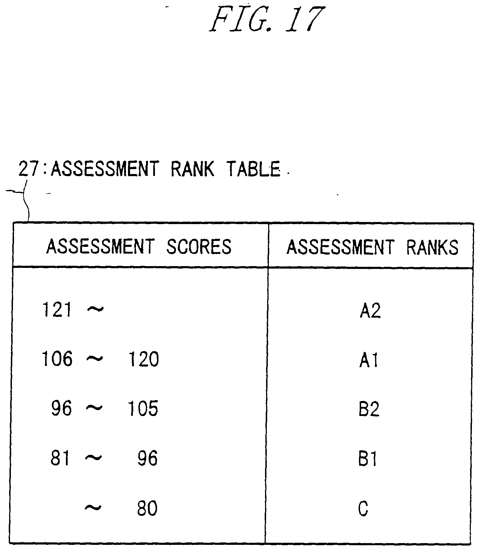

FIG. 17 is an explanatory diagram showing the assessment rank table 27 shown in FIG. 2. As shown in FIG. 17, the assessment rank table 27 is stored with ranges of the assessment scores (points) and the assessment ranks that correspond to each other. Note that the assessment rank is set in five categories A2, A1, B2, B1 and C in this example, however, the (number of) categories of the assessment ranks may be adequately set.

Next, the CPU 2 obtains the average number of bid tender days and the average transaction price by use of the assessment rank acquired (step S116). To be specific, the CPU 2 extracts (reads into the MM 3) all the records as the third extraction records having the component number received from the client C and the assessment rank acquired.

Subsequently, with respect to the extracted third extraction records, the CPU 2 obtains the average number of bid tender days and the average transaction price per price range by use of the price range table 25 and the first collection table 38 by the same method as steps S15 and S16 in the first embodiment.

Thereafter, the CPU 2 creates a message containing the acquired assessment rank, the assessment score, the average number of bid tender days and the average transaction price per price range, and delivers this message to the relevant client C (step S117).

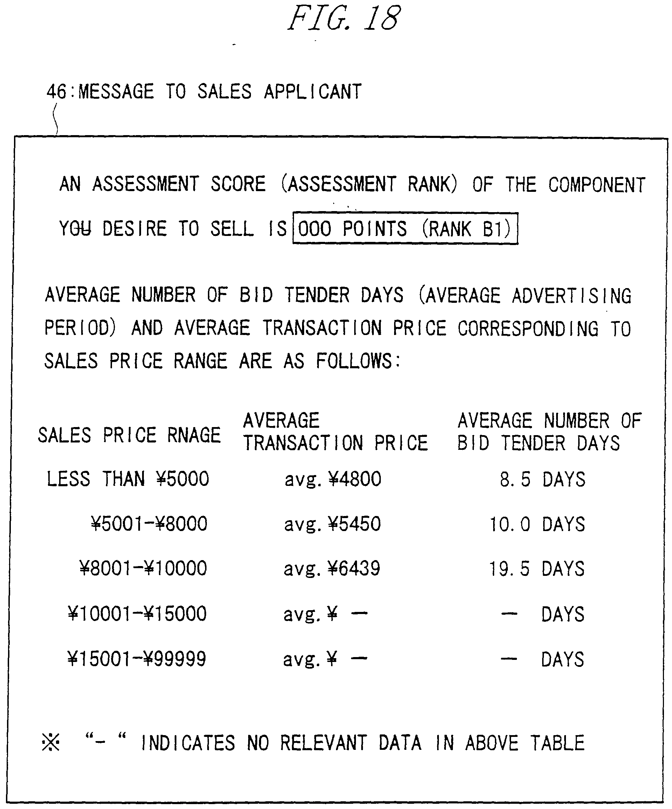

The client C thereby receives the same message, and this message is displayed on the display device 19. FIG. 18 is a diagram showing a display example of a message 46 displayed on the display device 19. As shown in FIG. 18, the assessment score and.the assessment rank of the sales target component are displayed to the user (sales applicant) of the client C. Further, the average number of bid tender days (the average advertising period) and the average transaction prices for every price range with respect to the vehicle components having the above assessment rank and the same component number, are also displayed to the user.

Note that the average number of bid tender days in the price range inclusive of the desired sales price may be obtained based on the assessment rank by substantially the same method as step S13 in the first embodiment, then transmitted to the client C and displayed on the display device 19 (the average number of bid tender days may be provided as the support information to the sales applicant) also in the second embodiment.

Further, the average number of bid tender days and the average transaction price at the interval of the predetermined advertising period may be obtained based on the assessment rank using the second collection table 40 by substantially the same method as steps S18 and S19 in the first embodiment, then transmitted to the client C and displayed on the display device 19 also in the second embodiment.

In accordance with the second embodiment also, the sales applicant is able to set a proper price of the transaction target component with reference to the support information (the assessment rank, the average number of bid tender days and the average transaction price) . Further, in the second embodiment, the quality of the component is evaluated based on the plurality of assessment items (assessment standards) including the using period. Thus, in the second embodiment, the quality of the sales target component is examined in greater details than in the first embodiment, and hence a gap between the condition of the sales target component and the transaction price can be made smaller than in the first embodiment.

Note that the assessment rank defined as one field of the record in the transaction history database DB 24, the assessment item database DB 26 and the assessment rank table 27, take structures used in the transaction system according to the second embodiment but are not used in the first embodiment. Therefore, if embodied in the transaction system according to the first embodiment, the assessment ranks in the transaction history DB 24, the assessment item DB 26 and the assessment rank table 27 are unnecessary.

Furthermore, according to the second embodiment, the assessments about the rust, scraped flaw, scratches and recess are made based on the answers of the sales applicant. Instead of this mode, these assessment items are removed from the assessment item DB 26 and the second input screen 44 as well, and, as a substitute for using these assessment items, the assessment score (points) may be calculated by use of the vehicle component image received via the second input screen 44. In this case, the component image is displayed on the display device 19, then the operator of the server S may input a score corresponding to a result of the assessment to the server S, and the CPU 2 may execute a predetermined process of the image in the server S, whereby the assessment score can be automatically calculated.

### [Third Embodiment]

Next, a third embodiment of the present invention will be discussed. The third embodiment has points common to the first embodiment, and the discussion will therefore be focused on different points from the first embodiment.

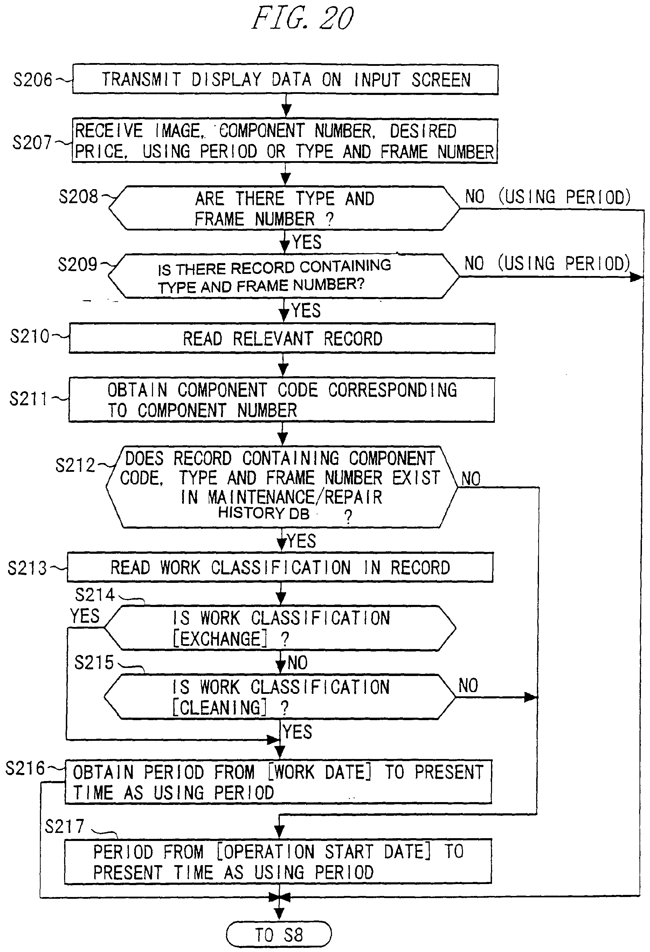

FIG. 20 is a flowchart showing processes (of the CPU 2) of the server S in the third embodiment. The processes of the server S and the client C in the third embodiment are the same as those in the first embodiment as far as steps S1 ∼ S5 shown in FIG. 3 are concerned. In the third embodiment, however, an input screen transmitted to the client C in step S6 is different from the input screen in the first embodiment.

In accordance with the third embodiment, in the client C, a type and a frame number of the vehicle from which the sales target component is taken, are inputted to the input screen. Therefore, in the third embodiment, the display data on an input screen 31B are transmitted to the client C in step S206 corresponding to step S6.

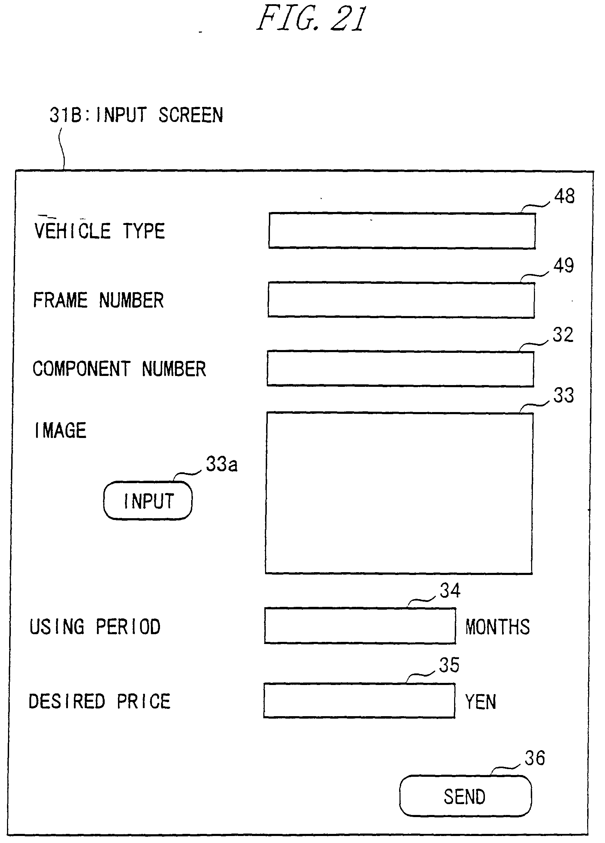

FIG. 21 is a diagram showing a display example on the input screen 31B in the third embodiment. As shown in FIG. 21, the input screen 31B is different from the input screen 31 (see FIG. 5) in terms of the following points. To be specific, the input screen 31B is what a vehicle type entry box 48 and a frame number input box 49 are added to the configuration of the input screen 31.

When the client C receives the display data on the input screen 31B and displays the input screen 31B on the display device 19, the user of the client C inputs an image, a component number and a desired price by the same method as the first embodiment. At this time, the user is able to selectively input the using period and a couple of the type and the frame number .

Namely, the input screen 31B is contrived so that if one of the using period and the couple of the type and the frame number is inputted, the other can not be inputted. Then, if neither the using period nor the couple of the type and the frame number is inputted, a contrivance is that the data can not be transmitted to the server S even when depressing the send button 36.

The user, when finishing the data entry process on the input screen 31B, depresses the send button 36 by manipulating the KBD 20 or the PD 21. Then, the CPU 12 of the client C transmits the image, the component number, the desired price and the using period (or the type and the frame number) to the server S.

The CPU 2 of the server S, when receiving the above information from the client C (step S207), judges whether or not the information received contains the type and the frame number of the vehicle (step S208). At this time, if containing the type and the frame number (step S208; YES) the CPU 2 advances the processing to S209. Whereas if the type and the frame number are not contained (step S208; NO), the CPU 2 judges that the information received from the client C contains not the type and the frame number but the using period, and diverts the processing to step S8 in FIG. 3. The processes after this are the same as those in the first embodiment.

When the processing proceeds to step S209, the CPU 2 searches the vehicle database DB 29 stored in the external storage device 4 by use of the type and the frame number, and thus judges whether or not a record containing the type and the frame number is stored therein.

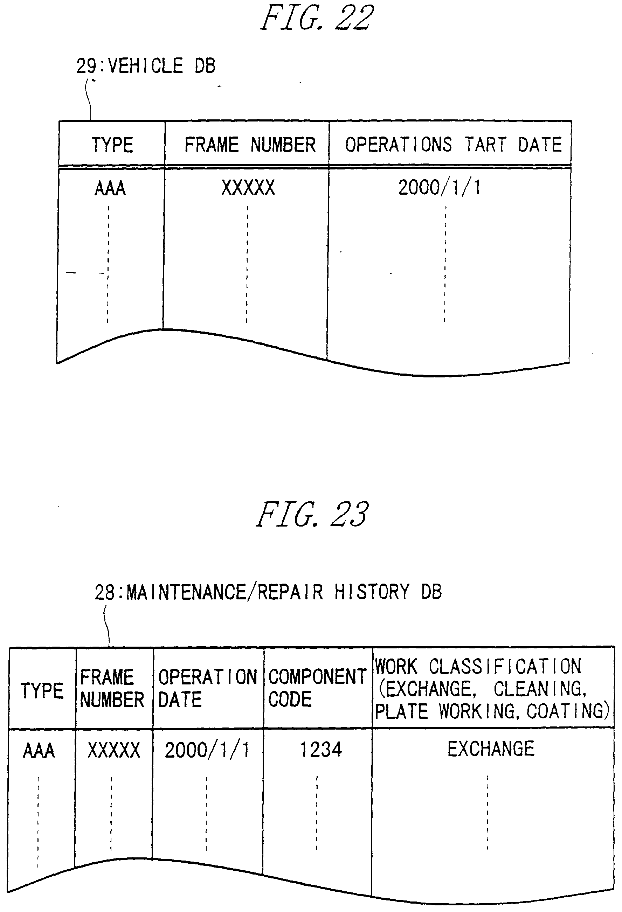

FIG. 22 is an explanatory diagram showing the vehicle DB 29 shown in FIG. 2. As shown in FIG. 22, the vehicle DB 29 retains records each consisting of fields such as a type, a frame number and an operation starting date.

The CPU 2, if a record containing the type and the frame number does not exist in the vehicle DB 29 (step S209; NO) , judges that the information received from the client C contains the using period, and diverts the processing to S8 in FIG. 3. The processes thereafter are the same as those in the first embodiment. Whereas if the record containing the type and the frame number exists in the vehicle DB 29 (step S209; YES), the CPU 2 reads the relevant record from the vehicle DB 29 into the MM 3.

Next, the CPU 2 obtains a component code corresponding to the component number received from the client C (step S211). This process is executed in such a way that the CPU 2 searches an unillustrated component number/component code conversion table stored beforehand I the external storage device 4 by us eof the component number. Note that the CPU 2 may also obtain the component code by searching the component database DB 23.

Next, the CPU 2 judges whether or not a record containing the-component code, the type and the frame number is stored in the maintenance/repair history database DB 28 stored in the external storage device 4 (step S212).

FIG. 23 is an explanatory diagram of the maintenance/repair history DB 28 shown in FIG. 2. The maintenance/repair history DB 28 retains a single or plurality of records each consisting of fields such as a type, a frame number, a work date, a component code and a work classification. The work classification field takes a value of any one of [exchange], [cleaning], [plate working] and [coating] in accordance with the type of the maintenance or the repair (restoration).

The CPU 2, if the record containing the component code, the type and the frame number is not stored in the maintenance/repair history DB 28 (step S212; NO) , advances the processing to step S217. If stored therein (step S212; YES), the CPU makes the processing proceed to step S213, and reads that record into the main memory MM 3.

Subsequently, the CPU 2 judges whether or not the work classification in the record read into the MM 3 is [exchange] (step S214). If the work classification is [exchange], the processing proceeds to step S216. Whereas if not, the processing goes forward to step S217.

In step S215, the CPU 2 judges whether or not the work classification in the record in the maintenance/repair history DB 28 that has been read into the MM3 is [cleaning]. If the work classification is [cleaning], the processing proceeds to step S216. Whereas if not, the processing diverts to step S217.

In step S216, the CPU 2 obtains, as the using period, a period extending from [work date] in the record in the maintenance/repair history DB 28 that has been read into the MM 3 up to the present time. Thereafter, the CPU 2 loops the processing back to step S8 in FIG. 3, and executes the same processes as those in the first embodiment.

In step S217, the CPU 2 obtains, as the using period, a period extending from [operation starting date] in the record in the vehicle DB 29 that has been read into the MM 3 in step S210 up to the present time, and loops the processing back to step S8. Thereafter, the CPU 2 executes the same processes as those in the first embodiment.

According to the third embodiment, the sales target component of the sales applicant is removed from the vehicle, and the same component is fitted to the vehicle in a maintenance and repair shop related to the administrator of the bulletin board 1, in which case the type and the frame number of the vehicle are entered on the input screen 31 b instead of the using period, and the using period is automatically set based on these pieces of data. Accordingly, under above conditions, even if the sales applicant forgets the using period of the component, the using condition of the component can be determined based on the precise using period.

Note that the maintenance/repair history DB 28, the vehicle DB 29 shown in FIG. 2, the component number/component code conversion table (not shown) and the input screen 31B, are used in only the third embodiment and may not be therefore provided if the transaction system in the first embodiment is carried out. Further, the first through third embodiments may be properly combined within the scope of the present invention without departing from the purpose of the present invention.

## Claims

1. A support system for setting a price of a transaction target article in response to a request given from a requester, comprising:
a storage unit storing identifying information for identifying the transaction target article and quality information for indicating a quality of the transaction target article;
a receiving unit receiving the identifying information of the transaction target article of which a price should be set by the requester, and a quality evaluating information for evaluating a quality of the transaction target article;
a reading unit reading the quality information coincident with the received identifying information and quality evaluating information; and
a transmitting unit transmitting the read-out quality information to the requester.

2. The system of claim 1, further comprising:
a transaction achievement information storage unit storing a transaction achievement information containing information on a transaction price of a transaction actually conducted with respect to the transaction article; and
a statistic value calculating unit calculating, when said reading unit reads from said transaction achievement information storage unit at least one item of transaction achievement information coincident with the inputted identifying information and the read-out quality information, a statistic value of the transaction price contained in at least one item of transaction achievement information that has been read out,
wherein said transmitting unit transmits the calculated statistic value of the transaction price to the requester.

3. The system of claim 2, further comprising:
a necessary time related information storage unit storing an information relating to a necessary time for the transaction actually conducted with respect to the transaction target article,
wherein said statistic value calculating unit calculates a statistic value of the necessary time on the basis of a single item or plural items of transaction achievement information read out from said transaction achievement information storage unit, and
said transmitting unit transmits, to the requester, the statistic value of the necessary time together with the statistic value of the transaction price.

4. The system of claim 3, further comprising
an extraction unit for extracting, when said receiving unit receives a desired transaction price of the transaction target article of which the price should be set together with the identifying information and the quality evaluating information, an item of transaction achievement information relating to the transaction conducted in a price range inclusive of the desired transaction price out of the read-out items of transaction achievement information,
wherein said statistic value calculating unit calculates a statistic value of the necessary time on the basis of the transaction achievement information extracted by said extraction unit, and
said transmitting unit transmits the statistic value of the necessary time based on the extracted item of transaction achievement information to the requester.

5. The system of claim 3, wherein said statistic value calculating unit calculates a statistic value of the transaction price and a statistic value of the necessary time in each of the plurality of price ranges set for the transaction target article of which the price should be set, and
said transmitting unit transmits, to the requester, the calculated results of the calculations of the transaction prices and the necessary time corresponding to each of the price ranges.

6. The system of claim 3, wherein said statistic value calculating unit calculates a statistic value of the transaction price and a statistic value of the necessary time in each of a plurality of advertising periods set for the transaction target article of which the price should be set, and
said transmitting unit transmits, to the requester, the calculated results of the calculations of the transaction prices and the necessary time corresponding to each of the advertising periods.

7. The system of any of claims 2-6, wherein the quality evaluating information is a using period of the transaction target article of which the price should be set, and
the quality information is a using condition set with the using period being divided.

8. The system of claim 7, wherein, if the using period exceeds a predetermined limit, said statistic value calculating unit executes no process.

9. The system of any of claims 1-8, wherein the quality evaluating information is an answer to a question about an assessment item with respect to the transaction target article of which the price should be set, and
the quality information is an assessment rank corresponding to an assessment score incremented or decremented corresponding to the answer to the question.

10. The system of any of claims 1-9, wherein the transaction target article is a component of a vehicle.

11. A system of any of claims 7-10, further comprising a maintenance information storage unit stored with a specifying information of a vehicle and an information for indicating a time when an exchange work or a cleaning work of the vehicle component is done,
wherein when said receiving unit receives the specifying information of the vehicle in place of the using period as the quality evaluating information together with the identifying information of the component as a target of the exchange work or the cleaning work as the identifying information of the transaction target component of which the price should be set, a period from the time of carrying out the exchange work or the cleaning work up to the present time, is set as the using period.

12. A support method for setting a price of a transaction target article in response to a request given from a requester, comprising:
storing an identifying information for identifying the transaction target article and quality information for indicating a quality of the transaction target article;
receiving the identifying information of the transaction target article of which a price should be set by the requester, and a quality evaluating information for evaluating a quality of the transaction target article;
reading out the quality information coincident with the received identifying information and quality evaluating information; and
transmitting the read-out quality information to the requester.

13. The method of claim 12, further comprising:
storing a transaction achievement information containing information on a transaction price of a transaction actually conducted with respect to the transaction article;
calculating, when at least one item of transaction achievement information coincident with the inputted identifying information and the read-out quality information are read out, a statistic value of the transaction price contained in at least one item of transaction achievement information that has been read out; and
transmitting the calculated statistic value of the transaction price to the requester.

14. The method of claim 13, further comprising:
storing an information relating to a necessary time for the transaction actually conducted with respect to the transaction target article;
calculating a statistic value of the necessary time on the basis of a single item or plural items of transaction achievement information read out; and
transmitting, to the requester, the statistic value of the necessary time together with the statistic value of the transaction price.

15. The method of claim 14, further comprising:
extracting, when a desired transaction price of the transaction target article of which the price should be set together with the identifying information and the quality evaluating information are received, an item of transaction achievement information relating to the transaction conducted in a price range inclusive of the desired transaction price out of the read-out items of transaction achievement information;
calculating a statistic value of the necessary time on the basis of the transaction achievement information extracted; and
transmitting the statistic value of the necessary time based on the extracted item of transaction achievement information to the requester.

16. The method of claim 14, further comprising:
calculating a statistic value of the transaction price and a statistic value of the necessary time in each of the plurality of price ranges set for the transaction target article of which the price should be set; and
transmitting, to the requester, the calculated results of the calculations of the transaction prices and the necessary time corresponding to each of the price ranges.

17. The method of claim 14, further comprising:
calculating a statistic value of the transaction price and a statistic value of the necessary time in each of a plurality of advertising periods set for the transaction target article of which the price should be set; and
transmitting, to the requester, the calculated results of the calculations of the transaction prices and the necessary time corresponding to each of the advertising periods.

18. The method of any of claims 13-17, wherein the quality evaluating information is a using period of the transaction target article of which the price should be set, and
the quality information is a using condition set with the using period being divided.

19. The method of claim 18, wherein, if the using period exceeds a predetermined limit, said statistic value calculating unit executes no process.

20. The method of any of claims 12-19, wherein the quality evaluating information is an answer to a question about an assessment item with respect to the transaction target article of which the price should be set, and
the quality information is an assessment rank corresponding to an assessment score incremented or decremented corresponding to the answer to the question.

21. The method of any of claims 12-20, wherein the transaction target article is a component of a vehicle.

22. The method of any of claims 18-21, further comprising storing with a specifying information of a vehicle and an information for indicating a time when an exchange work or a cleaning work of the vehicle component is done, and
when the specifying information of the vehicle in place of the using period as the quality evaluating information together with the identifying information of the component as a target of the exchange work or the cleaning work as the identifying information of the transaction target component of which the price should be set are received, a period from the time of carrying out the exchange work or the cleaning work up to the present time, is set as the using period.
